# EUROPEAN PATENT SPECIFICATION

(11) **EP 3 035 470 B1**
(45) Date of publication and mention of the grant of the patent: **05.12.2018**
(21) Application number: 15791464.9
(22) Date of filing: 08.07.2015
(51) Int. Cl.: H02G 9/06, H02G 3/04

(54) **CABLE PROTECTION PIPE**
KABELSCHUTZLEITUNG
TUYAU DE PROTECTION DE CÂBLE

(30) Priority: 11.07.2014 KR 20140005221 U
(43) Date of publication of application: 22.06.2016
(73) Proprietor: Dae Shin Urethane Co., Ltd., Gimcheon-si, Gyeongsangbuk-do 740-981 (KR)
(72) Inventor: KIM, Yong Woo, Gimcheon-si Gyeongsangbuk-do 740-979 (KR)
(74) Representative: Brevalex
(86) International application number: PCT/KR2015/007068
(87) International publication number: WO 2016/006928

(56) References cited:
- WO-A1-2006/059101
- DE-U1- 9 318 937
- GB-A- 2 365 941
- KR-A- 20100 116 337
- KR-A- 20110 052 837
- KR-A- 20120 100 841
- KR-Y1- 200 428 633
- KR-Y1- 200 428 633
- KR-Y1- 200 462 313

## Description

### [TECHNICAL FIELD]

The present invention relates to a cable protection pipe, and more particularly to a cable protection pipe which accommodates a communication cable, a power cable or the like cable therein to prevent the cable from damage due to an external force, and is easily assembled and disassembled to reduce installation costs when the cable is accommodated.

### [BACKGROUND ART]

Generally, various oil receiving duct, fresh water pipes, submarine power lines, communication cables, power cables and the like cables have to be covered with protection pipes when they are buried under the ground or the ocean floor. In particular, the power cable or the communication cable to be installed in the ocean floor for power transmission or communication between land and an island is buried in the nearby areas of the land and island. Such a cable to be buried has to be necessarily covered with a protection pipe since it may be damaged by anchor arms or the like of ships that anchor off the nearby areas of the land and island.

A conventional cable protection pipe includes an upper pipe and a lower pipe, each of which has a semicircular shaped, and the cable is accommodated in between the upper pipe and the lower pipe. Here, the upper pipe and the lower pipe are tied with a band on a groove recessed from a circumferential surface at a connection portion between the upper pipe and the lower pipe and having a first width and a first depth, so that the upper pipe and the lower pipe can be coupled to each other.

The document KR 200 428 633 describes a protector to protect cables.

The document GB2365941 describes a protective sleeving.

The document DE9318937 describes a guide channel.

The document WO2006059101 describes an improved ducting.

However, if the band is used for coupling the upper pipe and the lower pipe, there is a problem that the upper pipe and the lower pipe are easily separated since coupling force of the band is weak. Further, the band is inconvenient to couple the upper and lower pipes since the band has to be carried. In addition, the band costs much and lowers an efficiency of installing the cable protection pipe.

### [TECHNICAL PROBLEM]

An aspect of the present invention is to solve the foregoing problems and provide a cable protection pipe which accommodates a cable such as a communication cable, a power cable, etc. therein to prevent the cable from being damaged by external force, is easily assembled and disassembled to accommodate the cable, and reduces installation costs.

### [TECHNICAL SOLUTION]

The foregoing and/or other aspects of the present invention are achieved by providing a cable protection pipe including: a first body unit; and a second body unit facing and coupled to the first body unit, wherein the first body unit and the second body unit are coupled in a form of a hollow pipe capable of accommodating a cable therein, the first body unit including: a first body portion including a first lower coupling surface and a second lower coupling surface which are facing the second body unit, and forming a lower recessed space to accommodate a lower region of the cable; a first front coupling portion extended from a front of the first body portion along a lengthwise direction of the first body unit; and a first back coupling portion extended from a back of the first body portion along the lengthwise direction of the first body unit, the second body unit including: a second body portion including a first upper coupling surface and a second upper coupling surface which respectively correspond to the first lower coupling surface and the second lower coupling surface, and forming an upper recessed space to accommodate an upper region of the cable; a second front coupling portion extended from a front of the second body portion along a lengthwise direction of the second body unit; and a second back coupling portion extended from a back of the second body portion along the lengthwise direction of the second body unit, wherein the first lower coupling surface includes a first body coupling projection and a first position determining protrusion, and the second lower coupling surface includes a first lower body coupling hole and a first lower position determining groove, the first upper coupling surface includes a first upper body coupling hole to couple with the first body coupling projection, and a first upper position determining groove to couple with the first position determining protrusion, the second upper coupling surface includes a second body coupling projection to couple with the first lower body coupling hole, and a second position determining protrusion to couple with the first lower position determining groove, a first front coupling projection protrudes from a first front lower coupling surface of the first front coupling portion extended from the first lower coupling surface, a second front coupling hole to couple with the first front coupling projection is formed on a first front upper coupling surface of the second front coupling portion extended from the first upper coupling surface, and a back coupling portion of another neighbor cable protection pipe is inserted in an inner space formed by coupling the first front coupling portion and the second front coupling portion.

The first front coupling portion may include: a first section extended downward from the first front lower coupling surface and formed with the first front coupling projection; a second section extended downward from a second front lower coupling surface of the first front coupling portion extended from the second lower coupling surface; and a connection section connecting the first section and the second section, the connection section being thinner than each of the first section and the second section.

The connection section may include: a third section formed in between the first section and the second section and extended from the first body portion; and fourth sections extended from the first section and the second section, and connected to opposite ends of the third section, respectively, the third section being thinner than each of the fourth sections.

The fourth section may taper toward the third section while connecting the first section and the third section and connecting the second section and the third section.

A second front coupling projection may protrude from a second front upper coupling surface of the second front coupling portion extended from the second upper coupling surface, and the second front lower coupling surface may include a first front coupling hole to which the second front coupling projection is coupled.

The first front coupling projection may include: a first coupling main body protruding from the first front lower coupling surface toward the first front upper coupling surface; and a first hooking projection steppedly protruding and extended from the first coupling main body.

The second front coupling hole may include: a first front upper opening space recessed from an outer surface of the second front coupling portion; and a first insertion hole penetrating the first front upper coupling surface and communicating with the first front upper opening space, the first front coupling projection and the second front coupling hole being coupled with each other as the first hooking projection passes through the first insertion hole and is placed in the first front upper opening space.

The first body coupling projection, the second body coupling projection, the first front coupling projection and the second front coupling projection may be formed to have one shape.

The first position determining protrusion may taper from the first lower coupling surface toward the first upper coupling surface and including a rounded top end, the first upper position determining groove may be extended upward from the first upper coupling surface and corresponds to the first position determining protrusion, the first position determining protrusion may contract and the first upper position determining groove may be released while the first position determining protrusion is inserted in the first upper position determining groove, and the first position determining protrusion may be forcibly fitted to the first upper position determining groove as the insertion is completed.

An outer surface of the first back coupling portion may couple with an inner surface of a first front coupling portion of another neighboring cable protection pipe by shape matching.

### [ADVANTAGEOUS EFFECTS]

A cable protection pipe according to the present invention needs no separate coupling device such as a band for coupling a first body unit and a second body unit.

Further, the cable protection pipe makes installation work easy and reduces installation costs.

In future, the cable is easily replaced or maintained since the first and second body units are detachably coupled to each other.

According to the present invention, the coupling projections for coupling the first body unit and the second body unit do not protrude from a circumferential surface in the state that the coupling projections are fitted to the coupling holes, thereby improving coupling stability between the first body unit and the second body unit.

Further, the cable protection pipe is installed in the ocean floor or the like in the state that the first and second body units are coupled to each other, and it is therefore possible to prevent the cable or the coupling projections from being damaged by external force.

In addition, the cable protection pipe has a thick end portion to increase coupling strength in a connection portion between the cable protection pipes.

When two neighboring cable protection pipes are connected to each other, they have a forcible-fitting effect and are prevented from rotation in the coupling state and from separation.

### [DESCRIPTION OF DRAWINGS]

FIG. 1 schematically shows a cable protection pipe according to an embodiment of the present invention.
FIG. 2 shows coupling between a first front coupling portion and a second front coupling portion, taken along like II-II' of FIG. 1.
FIG. 3 shows coupling between a first position determining protrusion and a first upper position determining groove and coupling between a second position determining protrusion and a first lower position determining groove, taken along line III-III' of FIG. 1.
FIG. 4 shows coupling between the cable protection pipe of FIG. 1 and another neighboring cable protection pipe.
FIG. 5 shows the first front coupling portion of the cable protection pipe taken along like II-II' of FIG. 1.

### [BEST MODE]

Below, a cable protection pipe according to embodiments of the present invention will be described in detail with reference to accompanying drawings.

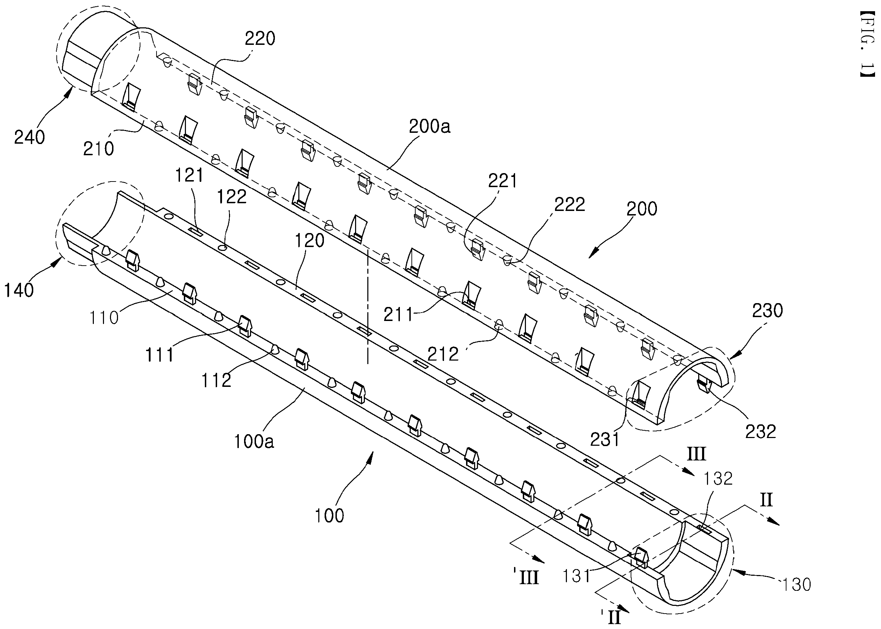

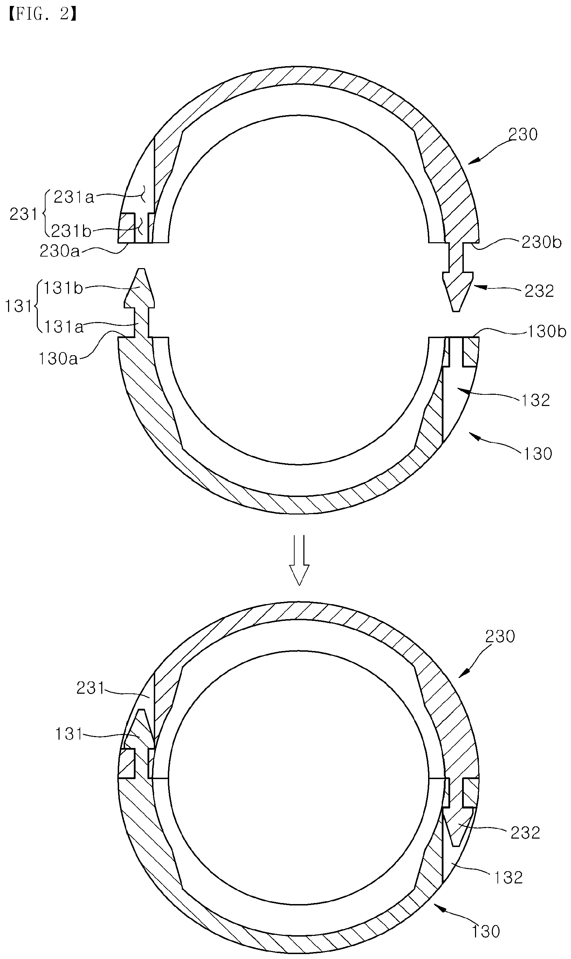

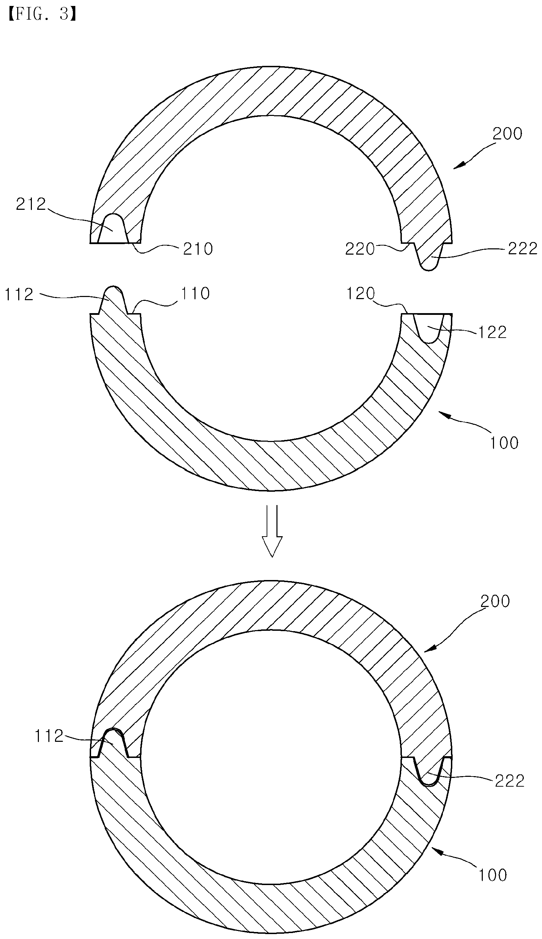

FIG. 1 schematically shows a cable protection pipe according to an embodiment of the present invention, FIG. 2 shows coupling between a first front coupling portion and a second front coupling portion, taken along like II-II' of FIG. 1, FIG. 3 shows coupling between a first position determining protrusion and a first upper position determining groove and coupling between a second position determining protrusion and a first lower position determining groove, taken along line III-III' of FIG. 1.

Referring to FIGs. 1 to FIG. 3, a cable protection pipe 1000 according to an embodiment of the present invention accommodates a communication cable, a power cable or the like cable therein and prevents the cable from being damaged by externa force. Further, the cable protection pipe 1000 according to an embodiment of the present invention is easily assembled and disassembled to accommodate the cable and reduces installation costs.

The cable protection pipe 1000 according to an embodiment of the present invention includes a first body unit 100 and a second body unit 200. The first body unit 100 and the second body unit 200 are coupled in the form of a hollow pipe capable of accommodating the cable therein.

The first body unit 100 includes a first body portion 100a, a first front coupling portion 130, a first back coupling portion 140.

The first body portion 100a includes a first lower coupling surface 110 and a second lower coupling surface 120 which are facing the second body unit 200. The first body portion 100a forms a lower recessed space to accommodate a lower region of the cable.

The first front coupling portion 130 is extended from the front of the first body portion 100a along a lengthwise direction of the first body unit 100.

The first back coupling portion 140 is extended from the back of the first body portion 100a along the lengthwise direction of the first body unit 100.

Further, first body coupling projections 111 and first position determining protrusions 112 protrude from the first lower coupling surface 110. Likewise, a first lower body coupling holes 121 and first lower position determining grooves 122 protrude from the second lower coupling surface 120.

The second body unit 200 includes a second body portion 200a, a second front coupling portion 230, and a second back coupling portion 240.

The second body portion 200a includes a first upper coupling surface 210 and a second upper coupling surface 220 which respectively correspond to the first lower coupling surface 110 and the second lower coupling surface 120. The second body portion 200a forms an upper recessed space to accommodate an upper region of the cable.

The second front coupling portion 230 is extended from the front of the second body portion 200a along a lengthwise direction of the second body unit 200.

The second back coupling portion 240 is extended from the back of the second body portion 200a along the lengthwise direction of the second body unit 200.

The first upper coupling surface 210 includes first upper body coupling holes 211 to couple with the first body coupling projections 111, and the first upper position determining grooves 212 to couple with the first position determining protrusions 112. Likewise, the second upper coupling surface 210 includes second body coupling projections 221 to couple with the first lower body coupling holes 121, and second position determining protrusions 212 to couple with the first lower position determining grooves 122.

Further, the first body portion 100a and the second body portion 200a are arranged so that the first lower coupling surface 110 and the second lower coupling surface 120 can be in contact with the first upper coupling surface 210 and the second upper coupling surface 220, respectively.

A first front coupling projection 131 protrudes from a first front lower coupling surface 130a of the first front coupling portion 130 extended from the first lower coupling surface 110. Further, a second front coupling hole 231, to which the first front coupling projection 131 is coupled, is formed on a first front upper coupling surface 230a of the second front coupling portion 230 extended from the first upper coupling surface 210.

Similarly, a second front coupling projection 232 protrudes from a second front upper coupling surface 230b of the second front coupling portion 230 extended from the second upper coupling surface 220. Further, a first front coupling hole 132, to which the second front coupling projection 232 is coupled, is formed on a second front lower coupling surface 130b of the first front coupling portion 130 extended from the second lower coupling surface 120.

As mentioned above, when the first body unit 100 and the second body unit 200 are coupled, the first body coupling projection 111 is fitted to the first upper body coupling hole 211. Further, the second body coupling projection 221 is fitted to the first lower body coupling hole 121. The first front coupling projection 131 is also fitted to the second front coupling hole 231. In addition, the second front coupling projection 232 is fitted to the first front coupling hole 132. Thus, the second body unit 200 is prevented from being separated from the first body unit 100.

Further, the first position determining protrusion 112 is fitted to the first upper position determining groove 212. Likewise, the second position determining protrusion 212 is fitted to the first lower position determining groove 122. Hence, it is possible to determine a position where the second body unit 200 is coupled to the first body unit 100.

In the foregoing description, the positions of the coupling projections and the corresponding coupling holes are not limited on the lower coupling surfaces 110, 120, 130a, 130b and the upper coupling surfaces 210, 220, 230a, 230b. Alternatively, the positions of the coupling projections and the coupling holes may be changed in various forms as long as they correspond to each other. Likewise, the positions of the determining protrusions and the corresponding determining grooves are not limited on the lower coupling surfaces 110, 120 and the upper coupling surfaces 210, 220. Alternatively, the positions of the determining protrusions and the corresponding determining grooves may be changed in various forms as long as they correspond to each other.

The first body coupling projection 111, the second body coupling projection 221, the first front coupling projection 131 and the second front coupling projection 232 may be formed to have the same shape. Correspondingly, the first upper body coupling hole 211, the first lower body coupling hole 121, the second front coupling hole 231 and the first front coupling hole 132 may be formed to have the same shape.

For example, as shown in FIG. 2, the first front coupling projection 131 includes a first coupling main body 131a protruding from the first front lower coupling surface 130a toward the first front upper coupling surface 230a, and a first hooking projection 131b steppedly protruding and extended from the first coupling main body 131a. Correspondingly, the second front coupling hole 231 includes a first front upper opening space 231a recessed from the outer surface of the second front coupling portion 230, and a first insertion hole 231b penetrating the first front upper coupling surface 230a and communicating with the first front upper opening space 231a.

As the first hooking projection 131b passes through the first insertion hole 231b and is placed in the first front upper opening space 231a, the first front coupling projection 131 and the second front coupling hole 231 are coupled to each other.

More specifically, the first hooking projection 131b contracts while passing through the first insertion hole 231b. The first insertion hole 231b is also released while the first hooking projection 131b passes therethrough. When the insertion is completed, the first hooking projection 131b is placed in the first front upper opening space 231a. Thus, the first front coupling projection 131 is coupled to the second front coupling hole 231. One side of the first hooking projection 131 is placed in a recessed portion of the first front upper opening space 231a. Here, the first front coupling projection 131 and the second front coupling hole 231 may be made of urethane or the like material.

Further, the first position determining protrusion 112 and the second position determining protrusion 212 may be formed to have the same shape. Correspondingly, the first upper position determining groove 212 and the first lower position determining groove 122 may be also formed to have the same shape.

For example, as shown in FIG. 3, the first position determining protrusion 112 from the first lower coupling surface 110 tapers toward the first upper coupling surface 210. The top end of the first position determining protrusion 112 is rounded.

Further, the first upper position determining groove 212 is recessed on the first upper coupling surface 210. In other words, the first upper position determining groove 212 is recessed corresponding to the first position determining protrusion 112.

While the first position determining protrusion 112 is inserted in the first upper position determining groove 212, the first position determining protrusion 112 contracts and the first upper position determining groove 212 is released. As the insertion is completed, the first position determining protrusion 112 and the first upper position determining groove 212 return to their original states, so that the first position determining protrusion 112 can be forcibly fitted to the first upper position determining groove 212. Here, the first position determining protrusion 112 and the first upper position determining groove 212 may be made of urethane or the like material.

Hence, the first position determining protrusion 112 is not easily separated from the first upper position determining groove 212. At this time, the width of the first upper position determining groove 212 may be smaller than the size of the first position determining protrusion 112.

Below, it will be schematically described that the first body unit 100 and the second body unit 200 are assembled.

First, the first body unit 100 and the second body unit 200 are arranged facing each other.

The first front coupling projection 131 is coupled to the second front coupling hole 231.

The second front coupling projection 232 is coupled to the first front coupling hole 132.

The first body coupling projection 111 is coupled to the first upper body coupling hole 211. Further, the second body coupling projection 221 is coupled to the first lower body coupling hole 121. Thus, the first body unit 100 and the second body unit 100 are not easily separated from each other.

Further, the first position determining protrusion 112 is coupled to the first upper position determining groove 212. Further, the second position determining protrusion 222 is coupled to the first lower position determining groove 122. Thus, the position where the first body unit 100 and the second body unit 200 are coupled is determined.

According to an embodiment of the present invention, the cable protection pipe does not have to include any separate coupling device such as a band in order to couple the first body unit 100 and the second body unit 100. Further, the cable protection pipe makes installation work easy and reduces installation costs. In future, the cable is easily replaced or maintained since the first body unit 100 and the second body unit 200 are detachably coupled to each other.

In addition, the coupling projections for coupling the first body unit 100 and the second body unit 200 do not protrude from a circumferential surface in the state that the coupling projections are fitted to the coupling holes, thereby improving coupling stability between the first body unit 100 and the second body unit 200. Thus, the cable protection pipe is installed in the ocean floor or the like in the state that the first body unit 100 and the second body unit 200 are coupled to each other, and it is therefore possible to prevent the cable or the coupling projections from being damaged by external force.

The scope of the present invention is not limited to the foregoing embodiments and alternatives, but embodied in various forms within the appended claims, in which changes can be made by anyone who has ordinary knowledge in the art to which the present invention pertains, without departing from the principles and spirit of the present invention.

### [MODE FOR INVENTION]

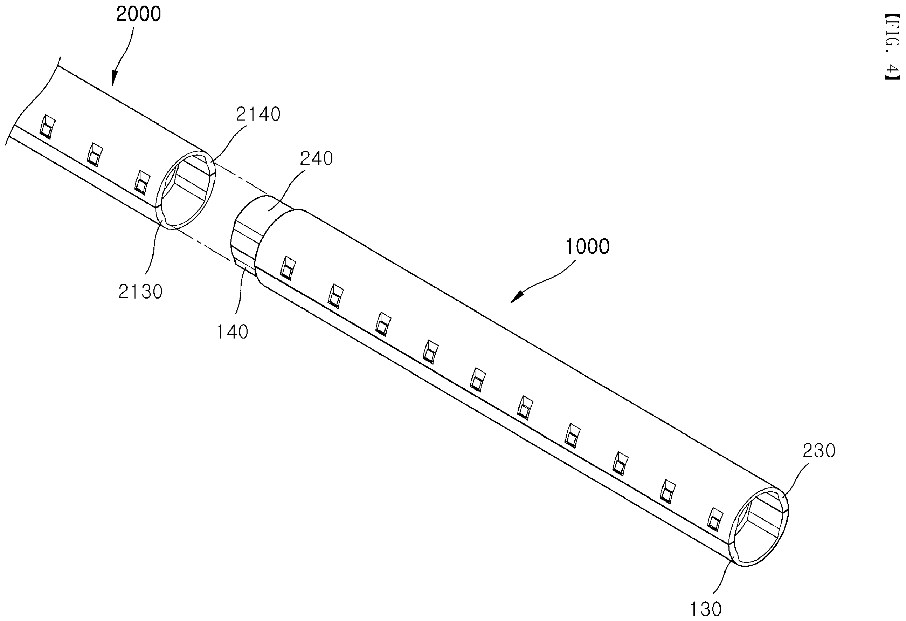

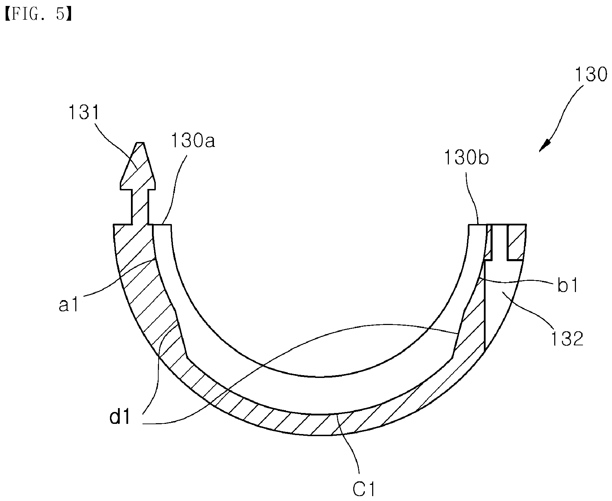

FIG. 4 shows coupling between the cable protection pipe of FIG. 1 and another neighboring cable protection pipe, and FIG. 5 shows the first front coupling portion of the cable protection pipe taken along like II-II' of FIG. 1.

Referring to FIGs. 1 to 5, the first back coupling portion 140 couples with a first front coupling portion 2130 of another neighboring cable protection pipe 2000. Similarly, the second back coupling portion 240 couples with a second front coupling portion 2140 of another neighboring cable protection pipe 2000.

At this time, from the back of the first back coupling portion 140, the inner surface of the first front coupling portion 2130 of the neighboring cable protection pipe 2000 is coupled to the outer surface of the first back coupling portion 140 by shape matching.

The first front coupling portion 130 couples with a first back coupling portion of still another neighboring cable protection pipe (not shown). Likewise, the second front coupling portion 230 couples with a second back coupling portion of still another neighboring cable protection pipe (not shown).

At this time, from the front of the first front coupling portion, the outer surface of the second back coupling portion of the neighboring cable protection pipe (not shown) is coupled to the inner surface of the front coupling portion 130 by shape matching.

In the foregoing description, the first front coupling portion 130 and the second front coupling portion 230 may have one shape. Correspondingly, the first back coupling portion 140 and the second back coupling portion 240 may have one shape.

For example, as shown in FIG. 5, the first front coupling portion 130 includes a first section a1, a second section b1 and a connection section.

The first section a1 is extended downward from the first front lower coupling surface 130a.

The first section a1 is formed with the first front coupling projection 131.

The second section b1 is extended downward from the second front lower coupling surface 130b.

The second section b1 is formed with the first front coupling hole 132.

The connection section connects the first section a1 and the second section b1.

At this time, the thickness of the connection section is smaller than those of the first section a1 and the second section b1. In other words, it is easy to form the first front coupling projection 131 in the first section a1 since the first section a1 is thicker than the connection section. Further, it is easy to form the first front coupling hole 132 in the second section b1 since the second section b1 is thicker than the connection section.

The connection section includes a third section c1 and fourth sections d1.

The third section c1 is formed in between the first section a1 and the second section b1.

The third section c1 is extended from the first body portion 100a.

The fourth sections d1 are extended from the first section a1 and the second section b1, and connected to both ends of the third section c1, respectively. The fourth section d1 extended from the first section a1 is directed toward the second section b1 along the circumferential surface of the first body portion 100a and integrally connected to one end of the third section c1. Further, the fourth section d1 extended from the second section b1 is directed toward the first section a1 along the circumferential surface of the first body portion 100a and integrally connected to the other end of the third section c1.

Preferably, the thickness of the third section c1 is smaller than those of the fourth section d1. Thus, the first front coupling portion 130 may have a stepped inner wall.

In particular, the fourth sections d1 taper toward the third section c1 while connecting the first section a1 and the third section c1 and connecting the second section b1 and the third section c1. The fourth section d1 extended from the first section a1 is gradually decreased in thickness toward and connected to one end of the third section c1. Further, the fourth section d1 extended from the second section b1 is gradually decreased in thickness toward and connected to the other end of the third section c1.

Since the first and second front coupling portions 130 and 230, and the corresponding first and second back coupling portions 140 and 240 are shaped as describe above, the cable protection pipe has a thick end portion to increase coupling strength in a connection portion between the cable protection pipes. Further, the first front coupling portion 130 and the second front coupling portion 230 have stepped inner walls, thereby having a forcible-fitting effect.

Further, when two neighboring cable protection pipes are connected to each other, the above stepped portion prevents the cable protection pipe from rotation and prevents two coupled cable protection pipes from separation.

### [INDUSTRIAL APPLICABILITY]

The cable protection pipe according to the present invention covers various oil receiving duct, fresh water pipes, submarine power lines, communication cables, power cables and the like cables when the cables are buried under the ground or the ocean floor. Further, the cable protection pipe according to the present invention covers the cable when the cable has to be protected from external force (impact or contact due to external environments).

For instance, the power cable or the communication cable to be installed in the ocean floor for power transmission or communication between land and an island is buried in the nearby areas of the land and island. Such a cable to be buried has to be necessarily covered with a protection pipe since it may be damaged by anchor arms or the like of ships that anchor off the nearby areas of the land and island.

## Claims

1. A cable protection pipe (1000) comprising:
a first body unit (100); and
a second body unit (200) facing and coupled to the first body unit (100), wherein
the first body unit (100) and the second body unit (200) are coupled in a form of a hollow pipe capable of accommodating a cable therein,
the first body unit (100) comprising:
a first body portion (100a) comprising a first lower coupling surface (110) and a second lower coupling surface (120) which are facing the second body unit (200), and forming a lower recessed space to accommodate a lower region of the cable;
a first front coupling portion (130) extended from a front of the first body portion (100a) along a lengthwise direction of the first body unit (100); and
a first back coupling portion (140) extended from a back of the first body portion (100a) along the lengthwise direction of the first body unit (100),
the second body unit (200) comprising:
a second body portion (200a) comprising a first upper coupling surface (210) and a second upper coupling surface (220) which respectively correspond to the first lower coupling surface (110) and the second lower coupling surface (120), and forming an upper recessed space to accommodate an upper region of the cable;
a second front coupling portion (230) extended from a front of the second body portion (200a) along a lengthwise direction of the second body unit (200); and
a second back coupling portion (240) extended from a back of the second body portion (200a) along the lengthwise direction of the second body unit (200), wherein
the first lower coupling surface (110) comprises a first body coupling projection (111) and a first position determining protrusion (112), and the second lower coupling surface (120) comprises a first lower body coupling hole (121) and a first lower position determining groove (122),
the first upper coupling surface (210) comprises a first upper body coupling hole (211) to couple with the first body coupling projection (111), and a first upper position determining groove (212) to couple with the first position determining protrusion (112),
the second upper coupling surface (220) comprises a second body coupling projection (221) to couple with the first lower body coupling hole (121), and a second position determining protrusion (222) to couple with the first lower position determining groove (122),
when the first body unit (100) and the second body unit (200) are coupled:
- the first body coupling projection (111) and the second body coupling projection (221) are fitted, respectively, into the first upper body coupling hole (211) and the first lower body coupling hole (121) so that the second body unit (200) is prevented from being separated from the first body unit (100); and
- the first determining protrusion (112) and the second determining protrusion (222) are fitted, respectively, into the first upper position determining groove (212) and the first lower position determining groove (122) for determining a position where the second body unit (200) is coupled to the first body unit (100);
a first front coupling projection (131) protrudes from a first front lower coupling surface (130a) of the first front coupling portion (130) extended from the first lower coupling surface (110), a first coupling main body (131a) protruding from the first front lower coupling surface (130a) toward the first front upper coupling surface (230a);
the cable protection pipe being **characterized in that**
the first front coupling projection (131) comprises:
a first hooking projection (131b) steppedly protruding and extended from the first coupling main body (131a);
a second front coupling hole (231) to couple with the first front coupling projection (131) is formed on a first front upper coupling surface (230a) of the second front coupling portion (230) extended from the first upper coupling surface (210),
the second front coupling hole (231) comprises:
a first front upper opening space (231a) recessed from an outer surface of the second front coupling portion (230); and
a first insertion hole penetrating the first front upper coupling surface (230a) and communicating with the first front upper opening space (231a),
the first front coupling projection (131) and the second front coupling hole (231) being coupled with each other as the first hooking projection (131b) passes through the first insertion hole and is placed in the first front upper opening space (231a),
and
a back coupling portion of another neighbor cable protection pipe is inserted in an inner space formed by coupling the first front coupling portion (130) and the second front coupling portion (230),
wherein
the first front coupling portion (130) comprises:
a first section (a1) extended downward from the first front lower coupling surface (130a) and formed with the first front coupling projection (131);
a second section (b1) extended downward from a second front lower coupling surface (130b)of the first front coupling portion (130) extended from the second lower coupling surface (120); and
the first front coupling portion (130) further comprises a connection section connecting the first section (a1) and the second section (b1),
the connection section being thinner than each of the first section (a1) and the second section (b1),
the connection section comprises:
a third section (c1) formed in between the first section (a1) and the second section (b1) and extended from the first body portion (100a); and
fourth sections (d1) extended from the first section (a1) and the second section (b1), and connected to opposite ends of the third section (c1), respectively,
wherein
the third section (c1) is thinner than each of the fourth sections (d1), so that the first front coupling portion(130) may have a stepped inner wall,
the first back coupling portion (140) has an outer surface which is matched with the inner surface of first front coupling portion (130), so that when the cable protection pipe is coupled to another cable protection pipe by inserting the back coupling portion of said another cable protection pipe into the inner space formed by coupling the first front coupling portion (130) and the second front coupling portion (230), the stepped inner wall prevents the rotation of said another cable protection pipe with respect to the protection pipe.

2. The cable protection pipe according to claim 1, wherein the fourth section tapers toward the third section (c1) while connecting the first section (a1) and the third section (c1) and connecting the second section (b1) and the third section (c1).

3. The cable protection pipe according to claim 1 or claim 2, wherein
a second front coupling projection (232) protrudes from a second front upper coupling surface (230b) of the second front coupling portion (230) extended from the second upper coupling surface (220), and
the second front lower coupling surface (130b) comprises a first front coupling hole (132) to which the second front coupling projection (232) is coupled.

4. The cable protection pipe according to any one of claims 1 to 3, wherein the first body coupling projection (111), the second body coupling projection (221), the first front coupling projection (131) and the second front coupling projection (232) are formed to have one shape.

5. The cable protection pipe according to any one of claims 1 to 4, wherein
the first position determining protrusion (112) tapers from the first lower coupling surface (110) toward the first upper coupling surface (210) and comprising a rounded top end,
the first upper position determining groove (212) is extended upward from the first upper coupling surface (210) and corresponds to the first position determining protrusion (112),
the first position determining protrusion (112) contracts and the first upper position determining groove (212) is released while the first position determining protrusion (112) is inserted in the first upper position determining groove (212), and
the first position determining protrusion (112) is forcibly fitted to the first upper position determining groove (212) as the insertion is completed.

## Patentansprüche

1. Kabelschutzrohr (1000), aufweisend:
eine erste Körpereinheit (100); und
eine zweite Körpereinheit (200), die gegenüber der ersten Körpereinheit (100) angeordnet und mit dieser gekoppelt ist,
wobei die erste Körpereinheit (100) und die zweite Körpereinheit (200) in Form eines hohlen Rohres gekoppelt sind, in dem ein Kabel untergebracht werden kann,
wobei die erste Körpereinheit (100) aufweist:
einen ersten Körperabschnitt (100a), der eine erste untere Kopplungsfläche (110) und eine zweite untere Kopplungsfläche (120), die der zweiten Körpereinheit (200) gegenüberliegen, aufweist und einen unteren ausgesparten Raum bildet, um einen unteren Bereich des Kabels unterzubringen;
einen ersten vorderen Kopplungsabschnitt (130), der sich von einer Vorderseite des ersten Körperabschnitts (100a) entlang einer Längsrichtung der ersten Körpereinheit (100) erstreckt; und
einen ersten hinteren Kopplungsabschnitt (140), der sich von einer Rückseite des ersten Körperabschnitts (100a) entlang der Längsrichtung der ersten Körpereinheit (100) erstreckt,
wobei die zweite Körpereinheit (200) aufweist:
einen zweiten Körperabschnitt (200a), der eine erste obere Kopplungsfläche (210) und eine zweite obere Kopplungsfläche (220), die jeweils der ersten unteren Kopplungsfläche (110) und der zweiten unteren Kopplungsfläche (120) entsprechen, aufweist und einen oberen ausgesparten Raum bildet, um einen oberen Bereich des Kabels unterzubringen;
einen zweiten vorderen Kopplungsabschnitt (230), der sich von einer Vorderseite des zweiten Körperabschnitts (200a) entlang einer Längsrichtung der zweiten Körpereinheit (200) erstreckt; und
einen zweiten hinteren Kopplungsabschnitt (240), der sich von einer Rückseite des zweiten Körperabschnitts (200a) entlang der Längsrichtung der zweiten Körpereinheit (200) erstreckt,
wobei:
die erste untere Kopplungsfläche (110) einen ersten Körperkopplungsvorsprung (111) und eine erste Positionsbestimmungsnase (112) aufweist und die zweite untere Kopplungsfläche (120) ein erstes unteres Körperkoppelungsloch (121) und eine erste untere Positionsbestimmungsnut (122) aufweist,
die erste obere Kopplungsfläche (210) ein erstes oberes Körperkopplungsloch (211), um mit dem ersten Körperkopplungsvorsprung (111) zu koppeln, und eine erste obere Positionsbestimmungsnut (212), um mit der ersten Positionsbestimmungsnase (112) zu koppeln, aufweist,
die zweite obere Kopplungsfläche (220) einen zweiten Körperkopplungsvorsprung (221), um mit dem ersten unteren Körperkopplungsloch (121) zu koppeln, und eine zweite Positionsbestimmungsnase (222), um mit der ersten unteren Positionsbestimmungsnut (122) zu koppeln, aufweist,
wenn die erste Körpereinheit (100) und die zweite Körpereinheit (200) gekoppelt sind:
- sind der erste Körperkopplungsvorsprung (111) und der zweite Körperkopplungsvorsprung (221) in dem ersten oberen Körperkoppelungsloch (211) bzw. dem ersten unteren Körperkopplungsloch (121) eingesetzt, so dass verhindert wird, dass die zweite Körpereinheit (200) von der ersten Körpereinheit (100) getrennt wird; und
- sind die erste Bestimmungsnase (112) und die zweite Bestimmungsnase (222) in der ersten oberen Positionsbestimmungsnut (212) bzw. der ersten unteren Positionsbestimmungsnut (122) eingesetzt, um eine Position zu bestimmen, wo die zweite Körpereinheit (200) mit der ersten Körpereinheit (100) gekoppelt ist;
ein erster vorderer Kopplungsvorsprung (131) von einer ersten vorderen unteren Kopplungsfläche (130a) des ersten vorderen Kopplungsabschnitts (130), die sich von der ersten unteren Kopplungsfläche (110) erstreckt, vorspringt,
wobei ein erster Kopplungshauptkörper (131a) von der ersten vorderen unteren Kopplungsfläche (130a) hin zu der ersten vorderen oberen Kopplungsfläche (230a) vorspringt;
wobei das Kabelschutzrohr **dadurch gekennzeichnet ist, dass**
der erste vordere Kopplungsvorsprung (131) einen ersten Hakenvorsprung (131b) aufweist, der stufig vorspringt und sich von dem ersten Kopplungshauptkörper (131a) erstreckt;
ein zweites vorderes Kopplungsloch (231), um mit dem ersten vorderen Kopplungsvorsprung (131) zu koppeln, an einer ersten vorderen oberen Kopplungsfläche (230a) des zweiten vorderen Kopplungsabschnitts (230), die sich von der ersten oberen Kopplungsfläche (210) erstreckt, gebildet ist,
das zweite vordere Kopplungsloch (231) aufweist:
einen ersten vorderen oberen Öffhungsraum (231a), der aus einer Außenfläche des zweiten vorderen Kopplungsabschnitts (230) ausgespart ist; und
ein erstes Einsetzloch, das in die erste vordere obere Kopplungsfläche (230a) eindringt und mit dem ersten vorderen oberen Öffnungsraum (231a) in Verbindung steht,
wobei der erste vordere Kopplungsvorsprung (131) und das zweite vordere Kopplungsloch (231) miteinander gekoppelt sind, wenn der erste Hakenvorsprung (131b) durch das erste Einsetzloch hindurchgeführt und in dem ersten vorderen oberen Öffhungsraum (231a) angeordnet wird, und
ein hinterer Kopplungsabschnitt eines anderen benachbarten Kabelschutzrohrs in einem durch Koppeln des ersten vorderen Kopplungsabschnitts (130) und des zweiten vorderen Kopplungsabschnitts (230)gebildeten Innenraum eingesetzt ist,
wobei
der erste vordere Kopplungsabschnitt (130) aufweist:
einen ersten Teil (a1), der sich von der ersten vorderen unteren Kopplungsfläche (130a) abwärts erstreckt und mit dem ersten vorderen Kopplungsvorsprung (131) gebildet ist;
einen zweiten Teil (b1), der sich von einer zweiten vorderen unteren Kopplungsfläche (130b) des ersten vorderen Kopplungsabschnitts (130), die sich von der zweiten unteren Kopplungsfläche (120) erstreckt, abwärts erstreckt; und
der erste vordere Kopplungsabschnitt (130) ferner einen Verbindungsteil aufweist, der den ersten Teil (a1) und den zweiten Teil (b1) verbindet,
wobei der Verbindungsteil dünner als der erste Teil (a1) und dünner als der zweite Teil (b1) ist,
der Verbindungsteil aufweist:
einen dritten Teil (c1), der zwischen dem ersten Teil (a1) und dem zweiten Teil (b1) gebildet ist und sich von dem ersten Körperabschnitt (100a) erstreckt; und
vierte Teile (d1), die sich von dem ersten Teil (a1) bzw. dem zweiten Teil (b1) erstrecken und mit entgegengesetzten Enden des dritten Teils (c1) verbunden sind,
wobei:
der dritte Teil (c1) dünner als jeder der vierten Teile (d1) ist, so dass der erste vordere Kopplungsabschnitt (130) eine gestufte Innenwand haben kann,
der erste hintere Kopplungsabschnitt (140) eine Außenfläche hat, die passend zur Innenfläche des ersten vorderen Kopplungsabschnitts (130) ist, so dass, wenn das Kabelschutzrohr mit einem anderen Kabelschutzrohr gekoppelt wird durch Einsetzen des hinteren Kopplungsabschnitts des anderen Kabelschutzrohrs in den durch Koppeln des ersten vorderen Kopplungsabschnitts (130) und des zweiten vorderen Kopplungsabschnitts (230) gebildeten Innenraum, die gestufte Innenwand ein Drehen des anderen Kabelschutzrohrs bezüglich des Kabelschutzrohrs verhindert.

2. Kabelschutzrohr nach Anspruch 1, wobei der vierte Teil sich hin zu dem dritten Teil (c1) verjüngt, während er den ersten Teil (a1) und den dritten Teil (c1) verbindet und den zweiten Teil (b1) und den dritten Teil (c1) verbindet.

3. Kabelschutzrohr nach Anspruch 1 oder Anspruch 2, wobei
ein zweiter vorderer Kopplungsvorsprung (232) von einer zweiten vorderen oberen Kopplungsfläche (230b) des zweiten vorderen Kopplungsabschnitts (230), die sich von der zweiten oberen Kopplungsfläche (220) erstreckt, vorspringt und
die zweite vordere untere Kopplungsfläche (130b) ein erstes vorderes Kopplungsloch (132) aufweist, mit welchem der zweite vordere Kopplungsvorsprung (232) gekoppelt ist.

4. Kabelschutzrohr nach einem der Ansprüche 1 bis 3, wobei der erste Körperkopplungsvorsprung (111), der zweite Körperkopplungsvorsprung (221), der erste vordere Kopplungsvorsprung (131) und der zweite vordere Kopplungsvorsprung (232) gebildet sind, um eine einheitliche Form zu haben.

5. Kabelschutzrohr nach einem der Ansprüche 1 bis 4, wobei
die erste Positionsbestimmungsnase (112) sich von der ersten unteren Kopplungsfläche (110) zur ersten oberen Kopplungsfläche (210) hin verjüngt und ein gerundetes Kopfende hat,
die erste obere Positionsbestimmungsnut (212) sich von der ersten oberen Kopplungsfläche (210) aufwärts erstreckt und der ersten Positionsbestimmungsnase (112) entspricht,
sich die erste Positionsbestimmungsnase (112) zusammenzieht und die erste obere Positionsbestimmungsnut (212) entspannt wird, während die erste Positionsbestimmungsnase (112) in die erste obere Positionsbestimmungsnut (212) eingesetzt wird, und die erste Positionsbestimmungsnase (112) in der ersten oberen Positionsbestimmungsnut (212) zwangseingepasst ist, wenn das Einsetzen abgeschlossen ist.

## Revendications

1. Tuyau de protection de câble (1000), comprenant :
une première unité de corps (100) ; et
une seconde unité de corps (200) faisant face et accouplée à la première unité de corps (100), dans lequel
la première unité de corps (100) et la seconde unité de corps (200) sont accouplées sous forme de tuyau creux capable de loger un câble dans celui-ci,
la première unité de corps (100) comprenant :
une première portion de corps (100a) comprenant une première surface d'accouplement inférieure (110) et une seconde surface d'accouplement inférieure (120) qui font face à la seconde unité de corps (200), et formant un espace évidé inférieur pour loger une région inférieure du câble ;
une première portion d'accouplement avant (130) étendue à partir d'un avant de la première portion de corps (100a) le long d'une direction de longueur de la première unité de corps (100) ; et
une première portion d'accouplement arrière (140) étendue à partir d'un arrière de la première portion de corps (100a) le long de la direction de longueur de la première unité de corps (100),
la seconde unité de corps (200) comprenant :
une seconde portion de corps (200a) comprenant une première surface d'accouplement supérieure (210) et une seconde surface d'accouplement supérieure (220) qui correspondent respectivement à la première surface d'accouplement inférieure (110) et la seconde surface d'accouplement inférieure (120), et formant un espace évidé supérieur pour loger une région supérieure du câble ;
une seconde portion d'accouplement avant (230) étendue à partir d'un avant de la seconde portion de corps (200a) le long d'une direction de longueur de la seconde unité de corps (200) ; et
une seconde portion d'accouplement arrière (240) étendue à partir d'un arrière de la seconde portion de corps (200a) le long de la direction de longueur de la seconde unité de corps (200), dans lequel
la première surface d'accouplement inférieure (110) comprend une première saillie d'accouplement de corps (111) et une première saillie de détermination de position (112), et la seconde surface d'accouplement inférieure (120) comprend un premier trou d'accouplement de corps inférieur (121) et une première rainure de détermination de position inférieure (122),
la première surface d'accouplement supérieure (210) comprend un premier trou d'accouplement de corps supérieur (211) pour s'accoupler à la première saillie d'accouplement de corps (111), et une première rainure de détermination de position supérieure (212) pour s'accoupler à la première saillie de détermination de position (112),
la seconde surface d'accouplement supérieure (220) comprend une seconde saillie d'accouplement de corps (221) pour s'accoupler au premier trou d'accouplement de corps inférieur (121), et une seconde saillie de détermination de position (222) pour s'accoupler à la première rainure de détermination de position inférieure (122),
lorsque la première unité de corps (100) et la seconde unité de corps (200) sont accouplées :
- la première saillie d'accouplement de corps (111) et la seconde saillie d'accouplement de corps (221) sont ajustées, respectivement, dans le premier trou d'accouplement de corps supérieur (211) et le premier trou d'accouplement de corps inférieur (121) pour que la seconde unité de corps (200) soit empêchée d'être séparée de la première unité de corps (100) ; et
- la première saillie de détermination (112) et la seconde saillie de détermination (222) sont ajustées, respectivement, dans la première rainure de détermination de position supérieure (212) et la première rainure de détermination de position inférieure (122) pour déterminer une position où la seconde unité de corps (200) est accouplée à la première unité de corps (100) ;
une première saillie d'accouplement avant (131) fait saillie à partir d'une première surface d'accouplement inférieure avant (130a) de la première portion d'accouplement avant (130) étendue à partir de la première surface d'accouplement inférieure (110), un premier corps principal d'accouplement (131a) faisant saillie à partir de la première surface d'accouplement inférieure avant (130a) vers la première surface d'accouplement supérieure avant (230a) ;
le tuyau de protection de câble étant **caractérisé en ce que** la première saillie d'accouplement avant (131) comprend :
une première saillie d'accrochage (131b) faisant saillie de façon épaulée et étendue à partir du premier corps principal d'accouplement (131a) ;
un second trou d'accouplement avant (231) pour s'accoupler à la première saillie d'accouplement avant (131) est formé sur une première surface d'accouplement supérieure avant (230a) de la seconde portion d'accouplement avant (230) étendue à partir de la première surface d'accouplement supérieure (210),
le second trou d'accouplement avant (231) comprend :
un premier espace d'ouverture supérieur avant (231a) évidé à partir d'une surface extérieure de la seconde portion d'accouplement avant (230) ; et
un premier trou d'insertion pénétrant dans la première surface d'accouplement supérieure avant (230a) et communiquant avec le premier espace d'ouverture supérieur avant (231a), la première saillie d'accouplement avant (131) et le second trou d'accouplement avant (231) étant accouplés l'un avec l'autre lorsque la première saillie d'accrochage (131b) passe à travers le premier trou d'insertion et est placée dans le premier espace d'ouverture supérieur avant (231a),
et
une portion d'accouplement arrière d'un autre tuyau de protection de câble voisin est insérée dans un espace intérieur formé en accouplant la première portion d'accouplement avant (130) et la seconde portion d'accouplement avant (230),
dans lequel
la première portion d'accouplement avant (130) comprend :
une première section (a1) étendue vers le bas à partir de la première surface d'accouplement inférieure avant (130a) et formée avec la première saillie d'accouplement avant (131) ;
une deuxième section (b1) étendue vers le bas à partir d'une seconde surface d'accouplement inférieure avant (130b) de la première portion d'accouplement avant (130) étendue à partir de la seconde surface d'accouplement inférieure (120) ; et
la première portion d'accouplement avant (130) comprend en outre une section de raccordement raccordant la première section (a1) et la deuxième section (b1),
la section de raccordement étant plus mince que chacune de la première section (a1) et de la deuxième section (b1),
la section de raccordement comprend :
une troisième section (c1) formée entre la première section (a1) et la deuxième section (b1) et étendue à partir de la première portion de corps (100a) ; et
des quatrièmes sections (d1) étendues à partir de la première section (a1) et de la deuxième section (b1), et raccordées à des extrémités opposées de la troisième section (c1), respectivement,
dans lequel
la troisième section (c1) est plus mince que chacune des quatrièmes sections (d1), pour que la première portion d'accouplement avant (130) puisse présenter une paroi intérieure épaulée,
la première portion d'accouplement arrière (140) possède une surface extérieure qui est assortie à la surface intérieure de première portion d'accouplement avant (130), pour que, lorsque le tuyau de protection de câble est accouplé à un autre tuyau de protection de câble en insérant la portion d'accouplement arrière dudit un autre tuyau de protection de câble dans l'espace intérieur formé en accouplant la première portion d'accouplement avant (130) et la seconde portion d'accouplement avant (230), la paroi intérieure épaulée empêche la rotation dudit un autre tuyau de protection de câble par rapport au tuyau de protection.

2. Tuyau de protection de câble selon la revendication 1, dans lequel la quatrième section s'effile vers la troisième section (c1) tout en raccordant la première section (a1) et la troisième section (c1) et raccordant la deuxième section (b1) et la troisième section (c1).

3. Tuyau de protection de câble selon la revendication 1 ou la revendication 2, dans lequel
une seconde saillie d'accouplement avant (232) fait saillie à partir d'une seconde surface d'accouplement supérieure avant (230b) de la seconde portion d'accouplement avant (230) étendue à partir de la seconde surface d'accouplement supérieure (220), et
la seconde surface d'accouplement inférieure avant (130b) comprend un premier trou d'accouplement avant (132) auquel la seconde saillie d'accouplement avant (232) est accouplée.

4. Tuyau de protection de câble selon l'une quelconque des revendications 1 à 3, dans lequel la première saillie d'accouplement de corps (111), la seconde saillie d'accouplement de corps (221), la première saillie d'accouplement avant (131) et la seconde saillie d'accouplement avant (232) sont formées pour présenter une forme.

5. Tuyau de protection de câble selon l'une quelconque des revendications 1 à 4, dans lequel
la première saillie de détermination de position (112) s'effile à partir de la première surface d'accouplement inférieure (110) vers la première surface d'accouplement supérieure (210) et comprenant une extrémité haute arrondie,
la première rainure de détermination de position supérieure (212) est étendue vers le haut à partir de la première surface d'accouplement supérieure (210) et correspond à la première saillie de détermination de position (112),
la première saillie de détermination de position (112) se contracte et la première rainure de détermination de position supérieure (212) est libérée alors que la première saillie de détermination de position (112) est insérée dans la première rainure de détermination de position supérieure (212), et
la première saillie de détermination de position (112) est ajustée de force sur la première rainure de détermination de position supérieure (212) lorsque l'insertion est achevée.
